# EUROPEAN PATENT APPLICATION

(11) **EP 4 790 938 A1**
(43) Date of publication of application: **12.08.2026**
(21) Application number: 25156072.8
(22) Date of filing: 05.02.2025
(51) Int. Cl.: H04L 5/00

(54) **MEASUREMENTS FOR REFERENCE SIGNAL RESOURCE PREDICTION**

(71) Applicant: Nokia Technologies Oy, 02610 Espoo (FI)
(72) Inventor: BONFANTE, Andrea, 91300 Massy (FR); JAYASINGHE, Laddu Keeth, 02610 Espoo (FI); AHMADIAN TEHRANI, Amir, 81541 Munich (DE); MEDINA, Daniel, 81541 Munich (DE)
(74) Representative: Swindell & Pearson Limited

(57) **Abstract**

Examples of the disclosure relate to measurements for reference signal resource prediction. A first message associated with measurements for reference signal resource prediction is received and measurements for reference signal resource prediction are performed in accordance with the first message. A second message associated with measurements for reference signal resource prediction is received. Inference using the measurements to obtain one or more reference signal resource predictions is performed. The reference signal resource predictions are reported in accordance with the second message.

## Description

### TECHNOLOGICAL FIELD

Examples of the disclosure relate to measurements for reference signal resource prediction. Some relate to aperiodic reporting of measurements for reference signal resource prediction.

### BACKGROUND

In communication networks models such as artificial intelligence (Al) or machine learning (ML) models can be used to predict reference signal resources. Where the predictions are in a temporal domain there needs to be sufficient gap between the triggering of the measurements and the reporting of the measurements to enable historical data to be collected for the model.

### BRIEF SUMMARY

According to some, but not necessarily all, examples of the disclosure there is provided an apparatus comprising:
at least one processor;
and at least one memory storing instructions that, when executed by the at least one processor, cause the apparatus to perform at least:
   receiving a first message wherein the first message is associated with measurements for reference signal resource prediction;
   performing measurements for reference signal resource prediction in accordance with the first message;
   receiving a second message wherein the second message is associated with measurements for reference signal resource prediction;
   performing inference using the measurements to obtain one or more reference signal resource predictions; and
   reporting, in accordance with the second message, reference signal resource predictions.

The inference may be performed using a machine learning model.

The measurements may be performed in accordance with the first message are used as input to the machine learning model and one or more reference signal resource predictions are provided as outputs of the machine learning model.

The reference signal resource predictions may be made for multiple future time instances.

The reference signal resource predictions may comprise beam predictions.

The processor and memory may also be configured to cause the apparatus to determine an association between the second message and the first message so that the report made in accordance with the second message relates to the measurements made based on the first message.

The first message may be associated with the second message via a trigger state.

The trigger state may have a structure and the structure may comprise a parameter indicating an ID of the trigger state.

The first message may be associated with a first trigger state and the second message may be associated with a second trigger state and the first and second trigger states are associated via at least one of:
a trigger state list;
IDs of the trigger states

The first message and the second message may be associated with the same trigger state.

When a trigger state is activated for a first time the UE may be instructed to perform the measurements for reference signal resource predictions and when the trigger state is activated for a second time the UE may be instructed to perform the reporting of the predictions.

When a trigger state may be activated for a first time the UE may be instructed to perform the measurements for reference signal resource predictions and when the trigger state is activated for a second time the UE may be instructed to perform the inference.

The first message may be associated with a first trigger state and the second message may be associated with a second trigger state and the first and second trigger states are associated via channel state information (CSI) report configurations.

The CSI report configurations of the first and second trigger states may refer to at least one of:
the same reference signal resource set;
the same reference signal resource set for prediction.

The processor and memory may also be configured to cause the apparatus to perform receiving a CSI report configuration.

The processor and memory may also be configured to cause the apparatus to perform receiving a configuration comprising a list of one or more trigger states.

The first message may be a downlink control information (DCI) message and the second message may be a DCI message.

The measurements may be reported in a channel state information (CSI) report.

Performing measurements for reference signal resource prediction may comprise repeating measurements over multiple time instances.

The measurements may be performed within a time window in accordance with a received CSI report configuration.

The processor and memory may also be configured to cause the apparatus to perform logging measurements based on a time window indicated in the first message and updating a set of measurements with latest logged measurements.

According to some, but not necessarily all, examples of the disclosure there is provided a method comprising:
receiving a first message wherein the first message is associated with measurements for reference signal resource prediction;
performing measurements for reference signal resource prediction in accordance with the first message;
receiving a second message wherein the second message is associated with measurements for reference signal resource prediction;
performing inference using the measurements to obtain one or more reference signal resource predictions; and
reporting, in accordance with the second message, reference signal resource predictions.

According to some, but not necessarily all, examples of the disclosure there is provided a computer program comprising computer program instructions for causing an apparatus to perform at least the following or for performing at least the following:
receiving a first message wherein the first message is associated with measurements for reference signal resource prediction;
performing measurements for reference signal resource prediction in accordance with the first message;
receiving a second message wherein the second message is associated with measurements for reference signal resource prediction;
performing inference using the measurements to obtain one or more reference signal resource predictions; and
reporting, in accordance with the second message, reference signal resource predictions.

According to various, but not necessarily all, embodiments there is provided an apparatus comprising:
at least one processor; and
at least one memory;
the at least one memory storing instructions that, when executed by the at least one processor, cause the apparatus to perform at least a part of one or more methods described herein.

According to various, but not necessarily all, embodiments there is provided an apparatus comprising means for performing at least part of one or more methods described herein. The description of a function and/or action should additionally be considered to also disclose any means suitable for performing that function and/or action. Functions and/or actions described herein can be performed in any suitable way using any suitable method.

According to various, but not necessarily all, embodiments there is provided examples as claimed in the appended claims.

While the above examples of the disclosure and optional features are described separately, it is to be understood that their provision in all possible combinations and permutations is contained within the disclosure. It is to be understood that various examples of the disclosure can comprise any or all the features described in respect of other examples of the disclosure, and vice versa. Also, it is to be appreciated that any one or more or all the features, in any combination, may be implemented by/comprised in/performable by an apparatus, a method, and/or instructions as desired, and as appropriate. The description of a function should additionally be considered to also disclose any means suitable for performing that function

### BRIEF DESCRIPTION

Some examples will now be described with reference to the accompanying drawings in which:
FIG. 1 shows an example network;
FIGS. 2A and 2B show prediction operations;
FIGS. 3A to 3C show example methods;
FIG. 4 shows example signalling;
FIG. 5 shows example signalling;
FIG. 6 shows example linking of trigger state ID;
FIG. 7 shows example linking of trigger state ID;
FIG. 8 shows example linking of trigger state ID;
FIG. 9 shows prediction operations; and
FIG. 10 shows an example controller.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Corresponding reference numerals are used in the figures to designate corresponding features. For clarity, all reference numerals are not necessarily displayed in all figures.

### DEFINITIONS

- Al: Artificial Intelligence
- AP: Aperiodic
- CSI: Channel State Information
- DCI: Downlink Control Information
- DL: Downlink
- FR2: Frequency Range 2
- HARQ: Hybrid Automatic Repeat Request
- L1-RSRP: Layer 1 Received Signal Reference Power
- ML: Machine Learning
- PDCCH: Physical Downlink Control Channel
- PDSCH: Physical Downlink Shared Channel
- PUSCH: Physical Uplink Shared Channel
- PUCCH: Physical Uplink Control Channel
- RRC: Radio Resource Channel
- RS: Reference Signal
- RSRP: Received Signal Reference Power
- RX: Receiver
- SCS: Subcarrier Spacing
- TCI: Transmission Configuration Information
- TX: Transmitter
- UE: User Equipment

### DETAILED DESCRIPTION

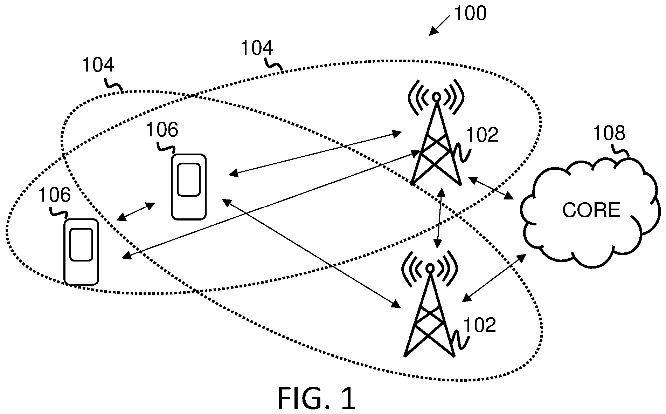

Fig. 1 illustrates an example of a communication network 100 to which examples of the disclosure can be applied. The communication network 100 is a cellular communication network. The communication network comprises network access nodes 102. The network access nodes 102 provide one or more cells 104. The cells 104 may define a coverage area or a service area of the corresponding network access node 102.

The network access nodes 102 can provide one or more user equipments (UE) 106 with wireless access to the communication network. The wireless access may comprise downlink (DL) communication from the network access node 102 to the UE 106 and uplink (UL) communication from the UE 106 to the network access node 102. Examples of uplink channels comprise physical uplink control channel (PUCCH) for transmitting control information and physical uplink shared channel (PUSCH) for transmitting data towards the network access nodes 102. Examples of downlink channels comprise physical downlink control channel (PDCCH) for transmitting control information and physical downlink shared channel (PDSCH) for transmitting data towards the UE 106.

There may be a plurality of UEs 106 in the network 100. Respective UEs 106 can be served by the same or by different network access nodes 102.

If the communication network 100 comprises multiple network access nodes 102 the network access nodes 102 can be connected to each other via an interface. LTE specifications refer to such an interface as an X2 interface. An interface between an LTE node and a 5G node, or between two 5G nodes can be called an Xn interface.

The network access nodes 102 can be further connected via another interface to a core network 108 of the communication network 100. The core network 108 can comprise core network nodes. The LTE specifications specify the core network as an evolved packet core (EPC), and the core network may comprise such as a mobility management entity (MME) and a gateway node. The MME may handle mobility of terminal devices in a tracking area encompassing a plurality of cells and handle signalling connections between terminal devices such as the UEs 106 and the core network 108. The gateway node may handle data routing in the core network 108 and to/from terminal devices such as the UEs 106. The 5G specifications specify the core network as a 5G core (5GC). The 5G core may comprise, for example, an access and mobility management function (AMF) and a user plane function/gateway (UPF) and other functions. The AMF may handle termination of non-access stratum (NAS) signalling, NAS ciphering & integrity protection, registration management, connection management, mobility management, access authentication and authorization, security context management. The UPF node may support packet routing and forwarding, packet inspection and quality of service (QoS) handling, for example. In other types of network other types of entities can be provided within the core network 108.

In communication networks 100 models such as artificial intelligence (Al) or machine learning (ML) models can be used to predict reference signal resources. The reference signal resources could comprise beams or any other resources that are used for communication between a UE 106 and a network access node 102.

There are two different use cases for predicting reference signal resources. The first use case is spatial domain prediction. For spatial domain the predictions are based on a set of measurements that does not contain historical information. The second use case is time domain prediction. For time domain prediction the predictions are based on a set of measurements that do contain historical information.

For beam prediction the measurements and predictions can be based on two beam sets. Set A is the complete set of beams over which the prediction will operate. Set B is the set of beams whose measurements will be inputted to the model. Set B could comprise layer 1 reference signal received power (L1-RSRP) or any other suitable beams. Set B can be different from Set A (for space-domain and time-domain prediction) or could be a subset of Set A (for space-domain and time-domain prediction) or could be the same as Set A (for time-domain prediction).

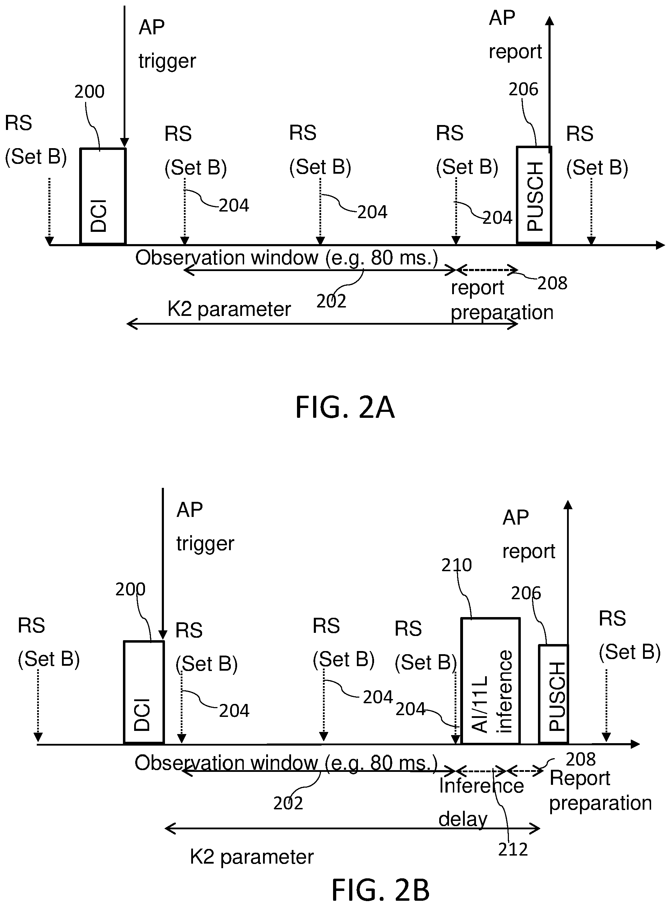

Figs. 2A and 2B show operations for predictions of reference signal resources. In these examples the predictions are beam predictions. The UE 106 reports measurements and/or prediction results for a given set of beams.

Fig. 2A shows operations for beam prediction where the model is in the network 100. For example the model could be implemented by a network access node 102 or the core network 108 or any other suitable entity or combination of entities in the network 100.

The UE 106 receives downlink control information (DCI) 200. The DCI can be received via PDCCH. The DCI triggers aperiodic reporting of the measurements. The measurements are reported over PUSCH 206.

The measurements are made during an observation window 202. The observation window 202 needs to be long enough to enable sufficient historical data to be collected for the inference to be performed by the model. The observation window 202 can comprise the receiving of multiple resource sets 204. In this case the resource sets 204 comprise beam set B. Multiple measurement instances can be combined in a single report. A time interval 208 is used for the report preparation.

The report comprising the measurements is sent to the network 100. The network 100 uses the measurements as inputs for a model to obtain a prediction for N future time instances. N can be any integer greater than or equal to one.

Fig. 2B shows operations for beam prediction where the model is in the UE 106. The UE 106 receives downlink control information (DCI) 200. The DCI can be received via PDCCH. The DCI triggers aperiodic reporting of the measurements. The measurements are reported over PUSCH 206.

The measurements are made during an observation window 202 which can be as shown in Fig. 2A. in this case the UE 106 performs the inference 210. The UE 106 uses the measurements collected during the observation window 202 to perform the inference 210. The UE 106 uses the measurements as inputs to a model to perform inference 210 and obtain a prediction for N future time instances. N can be any integer greater than or equal to one.

A time interval 212 is used for the inference and a time interval 208 is used for the report preparation.

The report comprising the predictions is sent to the network 100 via the PUSCH 206.

In both of the examples shown in Figs. 2A and 2B a significant time gap is needed between the reception of the DCI 200 and the transmission of the PUSCH 206. The time gap is needed to provide a sufficient observation window and to enable the UE 106 to prepare the report. In the cases where the model is implemented by the UE 106 the time gap also needs to enable the UE 106 to perform the inference. The time gap that is needed could be around 100 ms. However, the DCI scheduling a CSI report has a timing dependency indicated by the K2 parameter, which is configured by RRC signaling. The maximum duration is 32 slots, corresponding to 4 ms with 120 kHz Subcarrier Spacing (SCS) for FR2 bands. Therefore, the duration is much shorter than the time gap required for the prediction operations, which is about ~100 ms considering observation window duration. If this approach is used then K2 values should be increased to very large values.

However, the K2 parameter also determines the offset in slots between the PDCCH carrying the DCI 200 and the corresponding transmission of the PUSCH 206 providing the report. The K2 parameter plays a critical role in scheduling. During the interval between a DCI and the PUSCH transmission, no subsequent DCI can schedule an earlier PUSCH. Therefore, due to the deterministic nature of K2, the UE106 is not expected to be configured to schedule an out-of-order PUSCH transmission. This is also to limit the UE 106 implementation complexity and avoid problems with (hybrid automatic repeat request (HARQ) retransmissions.

Therefore, when delay between the DCI and the actual CSI report exceeds K2, it can cause invalid or failing CSI reports. On the other hand, large values of K2 can severely degrade uplink throughput due to the restrictions on PUSCH transmission.

Examples of the disclosure provide methods and apparatus that address these issues and that supports Aperiodic (AP) reporting for temporal reference signal resource prediction.

In examples of the disclosure the UE 106 can be configured to receive CSI-RS resources corresponding to set of beams (or other reference signal resources for measurements (Set B). The UE 106 performs measurements on Set B and reports these measurements or predictions (obtained from model inference based on these measurements) to the network 100 in a CSI report. The CSI-RS Configuration can be Periodic CSI-RS (P CSI-RS), Semi-Persistent CSI-RS (SP CSI-RS), or Aperiodic CSI-RS (AP CSI-RS).

For AP CSI-RS configuration, the UE 106 may be configured to measure multiple time instances of the CSI-RS corresponding to Set B.

For P CSI-RS, SP CSI-RS, and AP CSI-RS configurations, a message such as a DCI message can trigger aperiodic CSI reporting, where the UE 106 report multiple time instances of measurements or predictions in a single CSI report. In the case of the UE-sided model, the UE 106 reports predicted beam information for multiple time instances in a single CSI report. In the case of the NW-sided model, the UE 106 reports measured beam information for multiple time instances in a single CSI report.

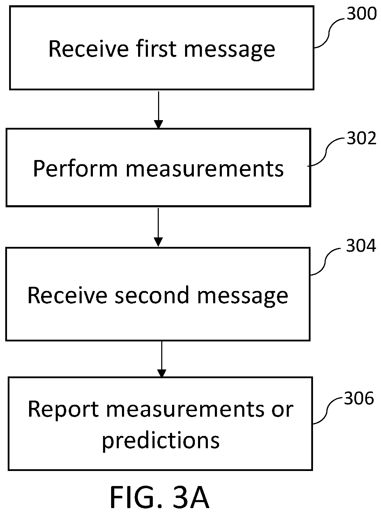

Figs. 3A to 3C show example methods that can be used in examples of the disclosure. The methods could be implemented by a UE 106 or by any other suitable means.

In the example of Fig. 3A, at block 300 the method comprises receiving a first message. The first message is associated with measurements for reference signal resource prediction. The reference signal resource predictions can comprise beam predictions.

The first message can comprise a downlink control information (DCI) message. The DCI message can be received via PDCCH.

At block 302 the method comprises performing measurements for reference signal resource prediction in accordance with the first message. Performing measurements for reference signal resource prediction can comprises repeating measurements over multiple time instances. The measurements can be performed within a time window in accordance with a received CSI report configuration. In some examples the measurements can be made for set B resources.

No reporting is expected or performed during the measurements that are triggered by the first message.

At block 304 the method comprises receiving a second message. The second message is associated with measurements for reference signal resource prediction. The second message can trigger the reporting of the measurements that were made in accordance with the first message.

The second message can comprise a downlink control information (DCI) message. The DCI message can be received via PDCCH. The second message can be received at a later time to the first message.

At block 306 the method comprises reporting, in accordance with the second message, at least one of measurements for reference signal resource prediction or reference signal resource predictions. The measurements can be reported in examples where the model is implemented by the network. The predictions can be reported in examples where the model is implemented by the UE 106.

In some examples the measurements or predictions are reported in a channel state information (CSI) report. The CSI report can be sent via PUSCH or by any other suitable means.

In some examples the method can comprise preparing the report comprising the measurements or the predictions. Preparing a report can comprise logging measurements based on a time window and updating a set of measurements with latest logged measurements. The time window can be indicated in the first message or can be indicated in a CSI configuration or could be indicated via any other suitable means.

In examples where the UE 106 implements the model the method can comprise implementing a machine learning model wherein the measurements performed in accordance with the first message are used as inputs to the machine learning model and one or more reference signal resource predictions are provided as outputs of the machine learning model. The predictions can then be provided in the report at block 306. Alternatively, if the model is implemented by the network 100 then the measurements can reported to an entity comprising a machine learning model to enable reference signal resource predictions to be made. The reference signal resource predictions can be made for multiple future time instances.

In some examples the UE 106 can determine an association between the second message and the first message so that the report made in accordance with the second message relates to the measurements made based on the first message. Any suitable means or procedures can be used to determine the association.

In some examples the first message can be associated with the second message via a trigger state. The trigger state can have a structure and the structure can comprise a parameter indicating an ID of the trigger state.

In some examples the first message can be associated with a first trigger state and the second message can be associated with a second trigger state. The UE 106 can then determine that the first and second trigger states are associated via a trigger state list and/or the IDs of the trigger states. The trigger state list can comprise trigger states that are not associated with the reference signal resource predictions. The trigger state list can be received in a configuration.

In some examples the first message and the second message can be associated with the same trigger state. In such examples when a trigger state is activated for a first time the UE 106 is instructed to perform the measurements for reference signal resource predictions. When the trigger state is activated for a second time the UE 106 is instructed to perform the reporting.

In some examples the first message can be associated with a first trigger state and the second message can be associated with a second trigger state. The first and second trigger states can be associated via channel state information (CSI) report configurations. In such examples the CSI report configurations of the first and second trigger states can refer to the same reference signal resource set or to the same reference signal resource set for prediction. In such examples the apparatus can receive a CSI report configuration.

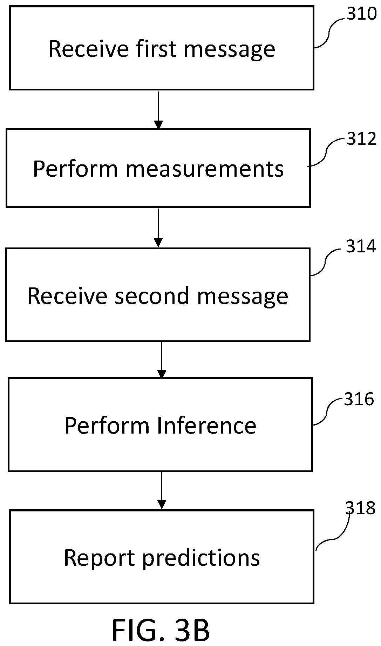

In the example of Fig. 3B, at block 310 the method comprises receiving a first message. The first message is associated with measurements for reference signal resource prediction. The reference signal resource predictions can comprise beam predictions.

The first message can comprise a downlink control information (DCI) message. The DCI message can be received via PDCCH.

At block 312 the method comprises performing measurements for reference signal resource prediction in accordance with the first message. Performing measurements for reference signal resource prediction can comprises repeating measurements over multiple time instances. The measurements can be performed within a time window in accordance with a received CSI report configuration. In some examples the measurements can be made for set B resources.

No reporting is expected or performed during the measurements that are triggered by the first message.

At block 314 the method comprises receiving a second message. The second message is associated with measurements for reference signal resource prediction. The second message can trigger the inference using the measurements that were made in accordance with the first message and the reporting of the predictions made using the inference.

The second message can comprise a downlink control information (DCI) message. The DCI message can be received via PDCCH. The second message can be received at a later time to the first message.

At block 316 the method comprises performing inference using the measurements to obtain one or more reference signal resource predictions. The inference can be implemented using a model such as an AI/ML model. The inference can use the measurements as input and provide predictions of reference signal resources as an output. The predictions can be provided for multiple future time instances.

In some examples the inference can be triggered by the second message. In other examples the reporting of the predictions of the inference can be triggered by the second message but the UE 106 can perform the inference before the second message is received.

At block 318 the method comprises, reporting, in accordance with the second message, reference signal resource predictions. In some examples predictions are reported in a channel state information (CSI) report. The CSI report can be sent via PUSCH or by any other suitable means.

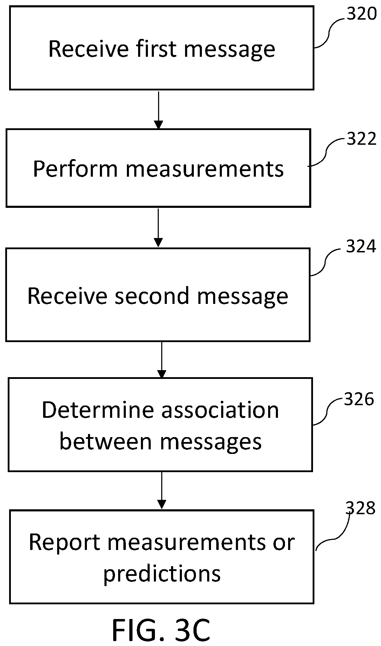

In the example of Fig. 3C, at block 320 the method comprises receiving a first message. The first message is associated with measurements for reference signal resource prediction. The reference signal resource predictions can comprise beam predictions, wherein a beam is referring to a Downlink (DL) Transmitter (Tx) beam, a DL Receiver (Rx) beam or DL Tx-Rx beams pair.

The first message can comprise a downlink control information (DCI) message. The DCI message can be received via PDCCH.

At block 322 the method comprises performing measurements for reference signal resource prediction in accordance with the first message. Performing measurements for reference signal resource prediction can comprises repeating measurements over multiple time instances. The measurements can be performed within a time window in accordance with a received CSI report configuration. In some examples the measurements can be made for set B resources.

No reporting is expected or performed during the measurements that are triggered by the first message.

At block 324 the method comprises receiving a second message. The second message can comprise a downlink control information (DCI) message. The DCI message can be received via PDCCH. The second message can be received at a later time to the first message. The second message is associated with measurements for reference signal resource prediction.

At block 326 the method comprises determining an association between the first message and the second message. The association can ensure that the report that is triggered by the second message relates to the reference signal resources that were measured in response to the first message. Any suitable means can be used to associated the second message to the first message. In some examples trigger states can be used to associate the respective messages.

At block 328 the method comprises reporting, in accordance with the second message, at least one of measurements for reference signal resource prediction or reference signal resource predictions. The measurements can be reported in examples where the model is implemented by the network. The predictions can be reported in examples where the model is implemented by the UE 106.

In some examples the measurements or predictions are reported in a channel state information (CSI) report. The CSI report can be sent via PUSCH or by any other suitable means.

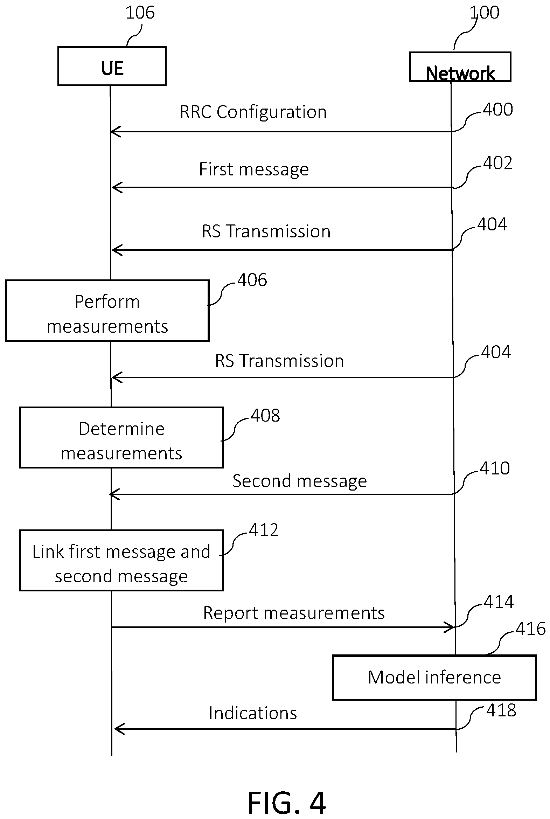

Fig. 4 shows example signalling that can be used in examples of the disclosure. In the example of Fig. 4 the network 100 performs the predictions.

At block 400 the network 100 configured the UE 106 with an RRC configuration. The RRC configuration can comprise a trigger state list. The trigger state list can associate one or more trigger states with specific reference signal (RS) resource sets. The trigger state list can comprise the higher layer parameter *CSI-AperiodicTriggerStateList.* The trigger state list can comprise a list of aperiodic trigger states *CSI-AperiodicTriggerState.* Each trigger state in *CSI-AperiodicTriggerStateList* comprises at least a *CSI-ReportConfig* indicating the Resource Set ID for channel measurements.

In some examples a first trigger state can be defined as a measurement trigger state. The measurement trigger state triggers the performance of the measurements. The first trigger state can have a first ID (for example ID=1). A second trigger state can be defined as a reporting trigger state. The reporting trigger state triggers the reporting of the measurements. The second trigger state can have a second ID (for example ID=2). The trigger state list can link the first trigger state and the second trigger state so that the UE 106 performs RS measurements according to the first trigger state and reports them aperiodically according to the second trigger state.

In other examples the link between the measurements and the reporting can be established at the DCI message level. In such cases the first message and the second message can be associated with the same trigger state. When the trigger state is activated for a first time the UE 106 is instructed to perform the measurements and when the trigger state is activated for a second time the UE 106 is instructed to report the measurements.

At block 402 the UE 106 receives a first message from the network 100. The first message can be a DCI message. The first message can comprise a CSI request field set to a pre-defined Trigger State Id (for example ID = 1) to activate the measurement trigger state. For example:
∘ DCI Message: CSI request field = 1 (measurement trigger state).

At block 404 the network 100 transmits aperiodic RS resources as configured. These RS resources can be used by the UE 106 for measurements in accordance with the first message. With a single Aperiodic Trigger, the network 100 can transmit multiple time instances of the RS resources. The RS resources can comprise set B resources. The RS resources can be transmitted for a temporal window. The temporal window needs to be long enough so that sufficient resources can be observed by the UE 106 to enable inference by the model.

At block 406 the UE 106 performs the RS measurements. The UE 106 can determine the RS resources to measure based on the Trigger State ID received in the first message. Based on the aperiodic offset (X) associated with the RS resources, the UE 106 measures the RS for each time instance of the temporal window duration, X slots after the slot when the UE 106 receives the first message 106. When the RS measurements are performed there is no reporting of the RS measurements based on first message.

At block 408 UE 106 determines the measurements. Determining the measurements can comprise repeating measurements for Set B over multiple time instances within the temporal window.

In some examples the UE may receive Periodic (P) CSI-RS or Semi-persistent (SP) CSI-RS resources . In such cases the network 100 configure the UE 106 to log a number of measurements based on the observation window length and update the set of measurements with the latest logged measurements. For instance, the observation window could have a duration of 80 ms. The logged measurements could comprise RSRP values for Set B for 3 time instances T, T-40 ms and T-80 ms.

At block 410 the UE 106 receives a second message from the network 100. The second message can be a DCI message. The second message is linked to the first message. For instance the second message could have the same CSI request field or could have a different Trigger State Id (for example ID = 2) for reporting. For example:
∘ DCI Message: CSI request field = 2 (reporting trigger state).

At block 412 the UE 106 links the first message and the second message. The messages can be linked based on the trigger state IDs. The UE 106 can also prepare the reporting of the measurements. The report can be prepared based on the first message and the second message. The UE 106 can determine the measurements corresponding to the observation window associated with the first message and the second message.

At step 414 the UE 106 sends a report of the RS measurements to the network 100. The report can be transmitted via PUSCH. The report can be transmitted in accordance with instructions associated with the second message. For example:
∘ Reported Measurements: RSRP values for Set B over the observation window.

At block 416 the network 100 performs inference based on the reported RS measurements. The network 100 can use a model such as an AI/ML model to perform the inference. The output of the inference can comprise one or more predictions for future time instances.

At block 418 the network 100 sends an indication to the UE 106. The indication is based on the output of the inference. The indication could comprise transmission configuration information (TCI) indication, TCI activation indication or another message to trigger measuring and reporting of refined reference signal resource information or any other suitable indication.

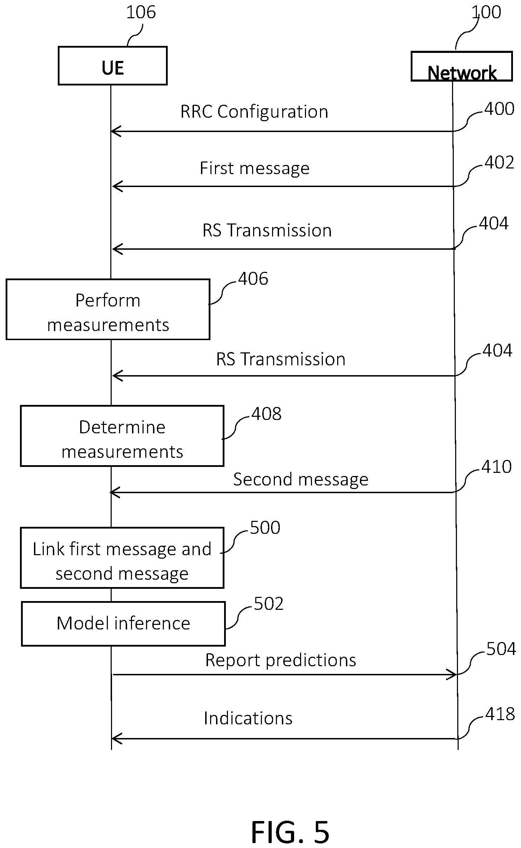

Fig. 5 shows example signalling that can be used in examples of the disclosure. In the example of Fig. 5 the UE 106 performs the predictions. In this example blocks 400 to 410 are as shown in Fig. 4 and described above. Corresponding reference numerals have been used for corresponding blocks.

At block 500 the UE 106 links the first message and the second message. The messages can be linked based on the trigger state IDs. The UE 106 can also determines the RS resources to predict. The RS resources to predict can be determined based on the first message and the second message. The UE 106 can determine the RS resources to predict corresponding to the observation window associated with the first message and the second message.

At block 502 UE 106 performs inference based on the determined RS measurements. The UE 106 can use a model such as an AI/ML model to perform the inference. The output of the inference can comprise one or more predictions for future time instances.

For instance, the UE 106 can use the measurements for Set B as input to a model to predict beam information for Set A. For Example:
∘ AI/ML Model Inference: Predict beam information for Set A based on history of RSRP values for Set B.

At step 504 the UE 106 sends a report of the predictions to the network 100. The report can be transmitted via PUSCH. The report can be transmitted in accordance with instructions associated with the second message. For example:
∘ Reported predictions: Predicted beam information for Set A over multiple time instances.

At block 418 the network 100 sends an indication to the UE 106. This is similar to block 418 as shown in Fig. 4. The indication is based on the output of the prediction report. The indication could comprise transmission configuration information (TCI) indication, TCI activation indication or another message to trigger measuring and reporting of refined reference signal resource information or any other suitable indication.

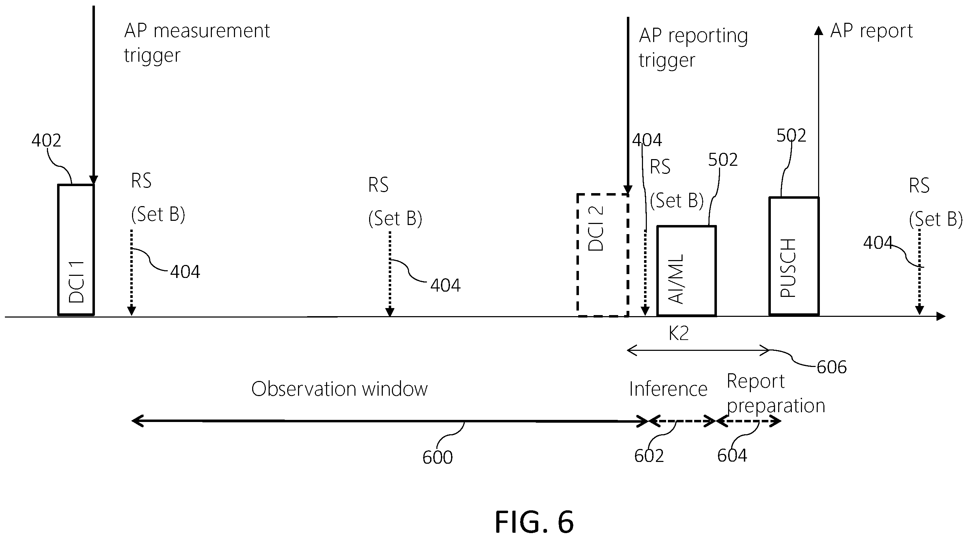

Fig. 6 shows operations for predictions of reference signal resources that can be used in examples of the disclosure. In the example of Fig. 5 the model is in the UE 106 and the UE 106 reports a set of predictions to the network 106. An analogous set of operations can be used for cases where the model is in the network 100 and the UE reports the set of measurements.

The UE 106 receives a first message 402. The first message 402 can comprise DCI information. The DCI can be received via PDCCH. The first message 402 triggers measurements of the resources without any reporting of the measurements.

The RS resources 404 are transmitted periodically by the network 100. The UE 106 performs measurements using the RS resources 404 during the observation window 600.

In some examples the network 100 can configure the UE 106 log a number of measurements based on the length of the observation window 600 and update the set of measurements with the latest measurements.

The UE 106 then receives a second message 410. The second message 410 is received after the first message 402. The first message can be received after the observation window 600. The second message 402 can comprise DCI information. The DCI can be received via PDCCH. The second message 408 triggers the reporting of the predictions based on the measurements that were triggered by the first message 402.

The second message 410 is linked to the first message 402. The second message 408 can be linked to the first message via trigger state IDs or any other suitable means or procedures. The linking of the second message 410 to the first message 402 enables the UE 106 to determine the RS resources to predict.

The UE 106 then performs the inference based on the determined RS measurements. The UE 106 can use a model such as an AI/ML model to perform the inference. The output of the inference can comprise one or more predictions for future time instances. For example, the measurements can be performed for set B and used to predict beam information for set A. A time period 602 is used for the inference.

The UE 106 can then prepare a report based on the prediction and send the report 504 comprising the predictions to the network 100. A time period 604 is used for the preparation of the report. The predictions can be sent via PUSCH. The predictions can be sent as instructed in the second message 410.

The examples of the disclosure address the issues with the K2 parameter constraints. The K2 parameter 606 in the example of Fig. 6 and is considerably reduced compared to the K2 parameter shown in Figs. 2A and 2B. In the example of fig. 6 the K2 parameter does not need to include the observation window 600. This enables efficient scheduling for the UE 106 because it avoids out-of-order PUSCH transmission. This is achieved through the use of the first message 402 and the second message 410.

The first message and the second message can be linked so that the appropriate resources are measured and the corresponding measurements or predictions are reported. In some examples trigger states can be used to link the respective measurements.

In examples of the disclosure the UE 106 is configured with a trigger state list. The UE 106 can be configured with the trigger state list using RRC or any other suitable signalling.

The trigger state list comprises one or more trigger states. There can be different types of trigger states to trigger different types of actions. In examples of the disclosure at least some of the trigger states can be used to trigger performing measurements and to trigger reporting measurements or predictions. These types of trigger states comprise a set of a parameters and/or conditions that indicate when the UE 106 is to perform measurements for beam predictions or report measurements or beam predictions.

A trigger state can be associated with CSI report configuration for inference. The CSI report configuration for inference can comprise a first RS resource set for beam measurement (or measurement of other reference signal resources) and a second RS resource set for beam prediction (or prediction of other reference signal resources). In examples where the network 100 implements the model the CSI report configuration can configure an observation window 600 for preforming the measurements and a window 604 for preparing a report of the measurements and/or any other relevant parameters. In examples where the UE 106 implements the model the CSI report configuration can configure an observation window 600 for preforming the measurements, a window 602 for performing the inference and a window 604 for preparing a report of the measurements and/or any other relevant parameters.

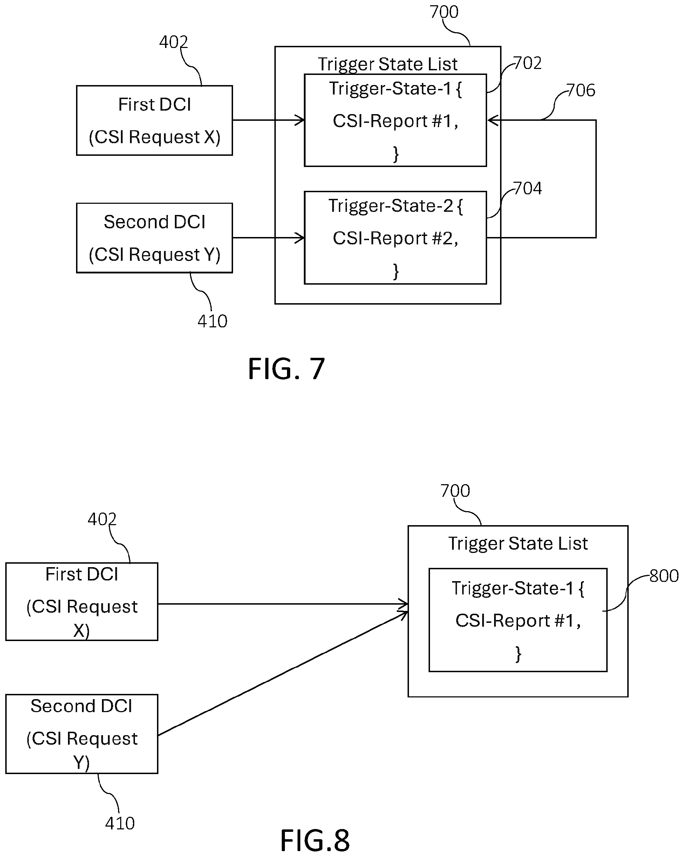

Fig. 7 schematically shows a first example of linking of trigger state IDs. The first message 402 is associated with a first CSI request X and the second message 410 is associated with a second CSI request Y.

The UE 106 is configured with a trigger state list 700. The trigger state list 700 comprises multiple trigger states. In the example of Fig. 7 a first trigger state 702 and a second trigger state 704 are shown. The trigger state list 700 can comprise other trigger states in other examples.

In the example of Fig. 7 the first trigger state 702 is associated with performing measurements and the second trigger state 704 is associated with reporting measurements or predictions. Some of the other trigger states in the trigger state list 700 could relate to operations other than the measurement and reporting operations.

When the UE 106 receives the first message 402 this message comprises a first CSI request. The UE 106 uses the CSI request in the first message 402 and the trigger state list 700 to determine the trigger state associated with the first message 402. In this case the first trigger state 702 is associated with the first message 402 and so this triggers the UE 106 to start performing the measurements. The first message 402 does not trigger the UE 106 to perform any reporting of the measurements or predictions.

When the UE 106 receives the second message 410 this message comprises a second CSI request. The UE 106 uses the CSI request in the second message 410 and the trigger state list 700 to determine the trigger state associated with the second message 410.

In this case a new parameter is comprised in the Trigger State structure to indicate the linked Trigger State ID and provide a direct link or association between the first message 402 and the second message 410. That this, the trigger state of the first message 402 is directly linked to the trigger state of the second message 410 with a new parameter added in Trigger State structure to indicate the linked Trigger State ID. The arrow 706 indicates the explicit link between the first trigger state 702 and the second trigger state 704.

The UE 106 determines that the second message 410 is associated with the first message 402 and so, in response to the second message 410, the UE 106 sends the report or predictions based on the measurements that were made in response to the first message.

Fig. 8 schematically shows a second example of linking of trigger state IDs. The first message 402 is associated with a first CSI request X and the second message 410 is associated with a second CSI request Y.

In this second example the UE 106 is also configured with a trigger state list 700. The trigger state list 700 comprises multiple trigger states. In the example of Fig. 8 a single trigger state 800 is shown. The trigger state list 700 can comprise other trigger states in other examples.

In this example the same trigger state 800 is associated with both the first message 402 and the second message 410

In this example when the UE 106 receives a first message 402 this message comprises a first CSI request. The UE 106 uses the CSI request in the first message 402 and the trigger state list 700 to determine the trigger state 800 associated with the first message 402.

When the UE 106 receives the second message 410 this message comprises a second CSI request. The UE 106 uses the CSI request in the second message 410 and the trigger state list 700 to determine the trigger state 800 associated with the second message 410. In this case the trigger state list 700 indicates that the two CSI requests are associated with the same trigger state 800. That this, the trigger state 800 of the first message 402 has the same ID as the trigger state 800 of the second message 410 in the trigger state list 700.

The UE 106 knows that when the trigger state 800 is activated for a second time that the UE 106 has to report measurements that were made following the trigger state 800 being activated for the first time.

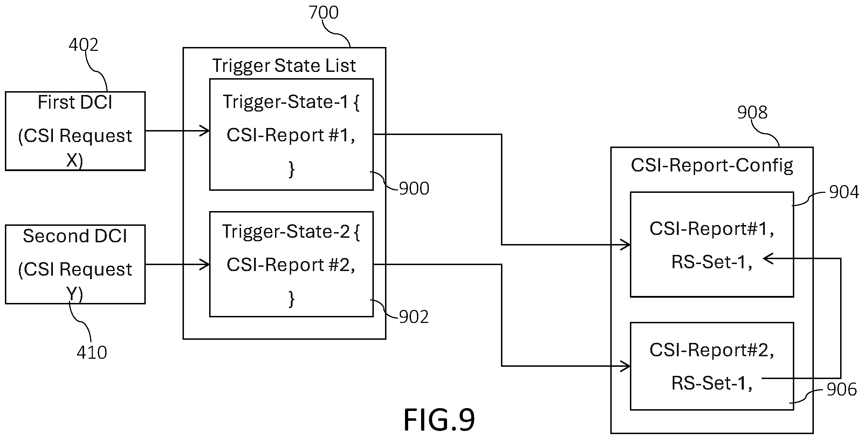

Fig. 9 schematically shows a third example of linking of trigger state IDs. The first message 402 is associated with a first CSI request X and the second message 410 is associated with a second CSI request Y.

In this third example the UE 106 is also configured with a trigger state list 700. The trigger state list 700 comprises multiple trigger states. In the example of Fig. 9 a a first trigger state 900 and a second trigger state 902 are shown. The trigger state list 700 can comprise other trigger states in other examples.

In this example the first trigger state 900 is associated with performing measurements and the second trigger state 902 is associated with reporting measurements or predictions. The trigger states 900, 902 are linked through a CSI report configuration 904.

The first message 402 is received by the UE 106 and comprises a first CSI request. The UE 106 uses the CSI request in the first message 402 and the trigger state list 700 to determine the trigger state 900 associated with the first message 402. The trigger state 900 is linked to a CSI Report Config ID 904. The CSI Report Config ID 904 is linked to a specific RS resource set.

The UE 106 is configured with a CSI Report configuration list 908. The CSI report configuration list associates CSI Report Config IDs 904, 906 with RS resource sets. The UE 106 can use the CSI Report configuration list 908 to determine the RS resources associated with the first trigger state 900.

When the UE 106 receives the second message 410 the second message 410 comprises a second CSI request. The UE 106 uses the CSI request in the second message 410 and the trigger state list 700 to determine the trigger state 902 associated with the second message 410. In this case the trigger state 902 is associated with a second CSI Report Config ID 906. The UE 106 uses the CSI-report configuration list 908 to determine that the second CSI report ID 906 is associated with the same RS resource set as the first CSI-report ID 904. The UE 106 therefore knows which measurements are to be reported.

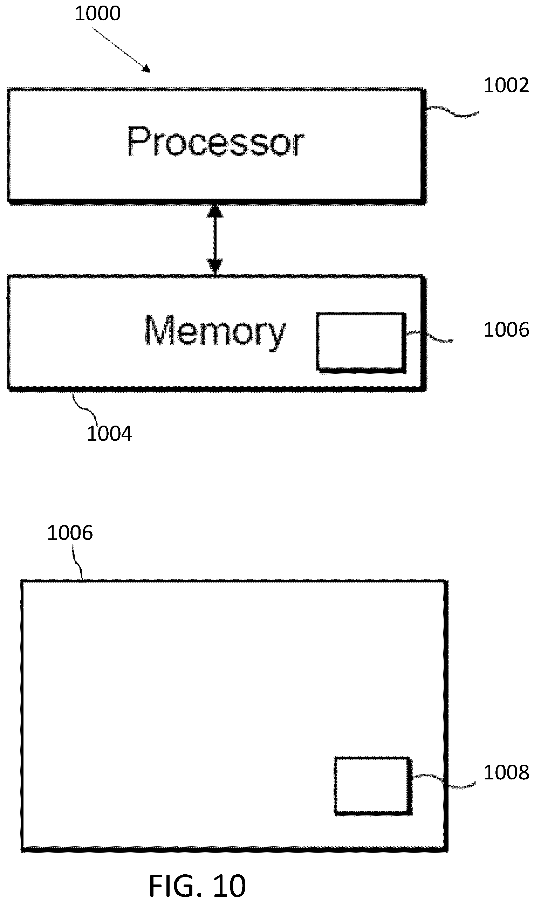

Fig. 10 shows an example controller 1000. The controller 1000 could be provided within a UE 106, or any other suitable entity. Implementation of the controller 1000 may be as controller circuitry. The controller 1000 may be implemented in hardware alone, have certain aspects in software including firmware alone or can be a combination of hardware and software (including firmware). The controller 1000 can provide an apparatus for implementing the disclosure of could be provided as part of an apparatus that implements the disclosure.

As illustrated in Fig. 9 the controller 1000 can be implemented using instructions that enable hardware functionality, for example, by using executable instructions of a computer program 1006 in a general-purpose or special-purpose processor 1002 that may be stored on a machine readable storage medium (disk, memory etc.) to be executed by such a processor 1002.

The processor 1002 is configured to read from and write to the memory 1004. The processor 1002 may also comprise an output interface via which data and/or commands are output by the processor 1002 and an input interface via which data and/or commands are input to the processor 1002.

The memory 1004 stores instructions, program 1006, or code that controls the operation of the apparatus when loaded into the processor 1002. The instructions, program 1006, or code provide the logic and routines that enables the apparatus to perform the methods illustrated in the Figs. The processor 1002 by reading the memory 1004 is able to load and execute the instructions, program 1006, or code.

In some examples where the controller 1000 is provided within an apparatus that controls a first radio subsystem, the controller therefore comprises means for:
receiving 300 a first message wherein the first message is associated with measurements for reference signal resource prediction;
performing 302 measurements for reference signal resource prediction in accordance with the first message;
receiving 304 a second message wherein the second message is associated with measurements for reference signal resource prediction; and
reporting 306, in accordance with the second message, at least one of:
   measurements for reference signal resource prediction; or
   reference signal resource predictions.

In some examples where the controller 1000 is provided within an apparatus that controls a first radio subsystem, the controller therefore comprises means for:
receiving 310 a first message wherein the first message is associated with measurements for reference signal resource prediction;
performing 312 measurements for reference signal resource prediction in accordance with the first message;
receiving 314 a second message wherein the second message is associated with measurements for reference signal resource prediction;
performing 316 inference using the measurements to obtain one or more reference signal resource predictions; and
reporting 318, in accordance with the second message, reference signal resource predictions.

In some examples where the controller 1000 is provided within an apparatus that controls a first radio subsystem, the controller therefore comprises means for:
receiving 320 a first message wherein the first message is associated with measurements for reference signal resource prediction;
performing 322 measurements for reference signal resource prediction in accordance with the first message;
receiving 324 a second message wherein the second message is associated with measurements for reference signal resource prediction;
determining 326 an association between the first message and the second message; and
reporting 328, in accordance with the association between the first message and the second message, at least one of: measurements for reference signal resource prediction; or reference signal resource predictions, wherein the determined association ensures that the report is made in accordance with the second message relates to the measurements made based on the first message.

The instructions, program 1006, or code may arrive at the apparatus via any suitable delivery mechanism 1008. The delivery mechanism 1008 may be, for example, a machine-readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 1006. The delivery mechanism may be a signal configured to reliably transfer the computer program 1006. The apparatus may propagate or transmit the computer program 1006 as a computer data signal.

The term "non-transitory" as used herein, is a limitation of the medium itself that is, tangible, not a signal) as opposed to a limitation on data storage persistency (for example, RAM vs. ROM).

The computer program 1006 can comprise computer program instructions for causing an apparatus to perform at least the following or for performing at least the following:
receiving 300 a first message wherein the first message is associated with measurements for reference signal resource prediction;
performing 302 measurements for reference signal resource prediction in accordance with the first message;
receiving 304 a second message wherein the second message is associated with measurements for reference signal resource prediction; and
reporting 306, in accordance with the second message, at least one of:
   measurements for reference signal resource prediction; or
   reference signal resource predictions.

The computer program 1006 can comprise computer program instructions for causing an apparatus to perform at least the following or for performing at least the following:
receiving 310 a first message wherein the first message is associated with measurements for reference signal resource prediction;
performing 312 measurements for reference signal resource prediction in accordance with the first message;
receiving 314 a second message wherein the second message is associated with measurements for reference signal resource prediction;
performing 316 inference using the measurements to obtain one or more reference signal resource predictions; and
reporting 318, in accordance with the second message, reference signal resource predictions.

The computer program 1006 can comprise computer program instructions for causing an apparatus to perform at least the following or for performing at least the following:
receiving 320 a first message wherein the first message is associated with measurements for reference signal resource prediction;
performing 322 measurements for reference signal resource prediction in accordance with the first message;
receiving 324 a second message wherein the second message is associated with measurements for reference signal resource prediction;
determining 326 an association between the first message and the second message; and
reporting 328, in accordance with the association between the first message and the second message, at least one of: measurements for reference signal resource prediction; or reference signal resource predictions, wherein the determined association ensures that the report is made in accordance with the second message relates to the measurements made based on the first message.

The computer program instructions may be comprised in a computer program, a non-transitory computer readable medium, a computer program product, a machine-readable medium. In some but not necessarily all examples, the computer program instructions may be distributed over more than one computer program.

Although the memory 1004 is illustrated as a single component/circuitry it may be implemented as one or more separate components/circuitry some or all of which may be integrated/removable and/or may provide permanent/semi-permanent/ dynamic/cached storage.

Although the processor 1002 is illustrated as a single component/circuitry it may be implemented as one or more separate components/circuitry some or all of which may be integrated/removable. The processor 1002 may be a single core or multi-core processor.

References to "computer-readable storage medium", "computer program product", "tangibly embodied computer program" etc. or a "controller", "computer", "processor" etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry including quantum processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term "circuitry" can refer to one or more or all of the following:
(a) hardware-only circuitry implementations (such as implementations in only analog and/or digital circuitry) and
(b) combinations of hardware circuits and software, such as (as applicable):
   (i) a combination of analog, digital and/or quantum hardware circuit(s) with software/firmware and
   (ii) any or all portions of hardware processor(s) (including digital and/or quantum processor(s)) with software, and memory(ies) that work together to cause an apparatus, such as a mobile device, computing device or server, to perform various functions and
(c) any or all portions of hardware circuit(s) such as a microprocessor(s) and/or quantum processor(s) that requires software (for example, firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the claim element, a baseband integrated circuit or processor integrated circuit for a mobile device or a similar integrated circuit in a server, a cellular network device, or other computing or network device.

The blocks illustrated in the Figs. can represent steps in a method and/or sections of code in the computer program 1006. The illustration of a particular order to the blocks does not necessarily imply that there is a required or preferred order for the blocks and the order and arrangement of the block can be varied. Furthermore, it can be possible for some blocks to be omitted.

Where a structural feature has been described, it may be replaced by means for performing one or more of the functions of the structural feature whether that function or those functions are explicitly or implicitly described.

The above-described examples find application as enabling components of:
automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The apparatus can be provided in an electronic device, for example, a mobile terminal, according to an example of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples, the apparatus can be provided in a mobile terminal, other types of electronic devices, such as, but not limited to: mobile communication devices, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to 'comprising only one...' or by using 'consisting.'

In this description, the wording 'connect', 'couple' and 'communication' and their derivatives mean operationally connected/coupled/in communication. It should be appreciated that any number or combination of intervening components can exist (including no intervening components), i.e., to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database, or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can', or 'may' refers to a particular instance in a class of examples. A property of the instance can be a property of only that instance or a property of the class or a property of a sub-class of the class that includes some but not all the instances in the class. It is therefore implicitly disclosed that a feature described with reference to one example but not with reference to another example, can where possible be used in that other example as part of a working combination but does not necessarily have to be used in that other example.

As used herein, "at least one of the following: " and "at least one of " and similar wording, where the list of two or more elements are joined by "and" or "or" mean at least any one of the elements, or at least any two or more of the elements, or at least all the elements.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

The description of a feature, such as an apparatus or a component of an apparatus, configured to perform a function, or for performing a function, should additionally be considered to also disclose a method of performing that function. For example, description of an apparatus configured to perform one or more actions, or for performing one or more actions, should additionally be considered to disclose a method of performing those one or more actions with or without the apparatus.

Although features have been described with reference to certain examples, those features may also be present in other examples whether described or not.

The term 'a', 'an' or `the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or `the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

As used herein, the terms "the at least one" and "the one or more" mean "any one of the at least one" and "any one of the one or mor" respectively.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance the Applicant may seek protection via the claims in respect of any patentable feature or combination of features hereinbefore referred to and/or shown in the drawings whether or not emphasis has been placed thereon.

## Claims

1. An apparatus comprising:
at least one processor;
and at least one memory storing instructions that, when executed by the at least one processor, cause the apparatus to perform at least:
receiving a first message wherein the first message is associated with measurements for reference signal resource prediction;
performing measurements for reference signal resource prediction in accordance with the first message;
receiving a second message wherein the second message is associated with measurements for reference signal resource prediction;
performing inference using the measurements to obtain one or more reference signal resource predictions; and
reporting, in accordance with the second message, reference signal resource predictions.

2. The apparatus of claim 1 wherein the inference is performed using a machine learning model.

3. The apparatus of claim 2 wherein the measurements performed in accordance with the first message are used as input to the machine learning model and one or more reference signal resource predictions are provided as outputs of the machine learning model.

4. The apparatus of any preceding claim wherein the reference signal resource predictions are made for multiple future time instances.

5. The apparatus of any preceding claim wherein the reference signal resource predictions comprise beam predictions.

6. The apparatus of any preceding claim wherein the processor and memory are also configured to cause the apparatus to determine an association between the second message and the first message so that the report made in accordance with the second message relates to the measurements made based on the first message.

7. The apparatus of any preceding claim wherein the first message is associated with the second message via a trigger state.

8. The apparatus of claim 7 wherein the trigger state has a structure and the structure comprises a parameter indicating an ID of the trigger state.

9. The apparatus of claims 7 to 8 wherein the first message is associated with a first trigger state and the second message is associated with a second trigger state and the first and second trigger states are associated via at least one of:
a trigger state list;
IDs of the trigger states

10. The apparatus of claims 7 to 9 wherein the first message and the second message are associated with the same trigger state.

11. The apparatus of claim 10 wherein when a trigger state is activated for a first time the UE is instructed to perform the measurements for reference signal resource predictions and when the trigger state is activated for a second time the UE is instructed to perform the reporting of the predictions.

12. The apparatus of claim 10 wherein when a trigger state is activated for a first time the UE is instructed to perform the measurements for reference signal resource predictions and when the trigger state is activated for a second time the UE is instructed to perform the inference.

13. The apparatus of claims 7 to 12 wherein the first message is associated with a first trigger state and the second message is associated with a second trigger state and the first and second trigger states are associated via channel state information (CSI) report configurations.

14. The apparatus of claim 13 wherein the CSI report configurations of the first and second trigger states refer to at least one of:
the same reference signal resource set;
the same reference signal resource set for prediction.

15. The apparatus of any preceding claim wherein performing measurements for reference signal resource prediction comprises repeating measurements over multiple time instances.
